# EUROPEAN PATENT APPLICATION

(11) **EP 4 744 967 A1**
(43) Date of publication of application: **20.05.2026**
(21) Application number: 25382507.9
(22) Date of filing: 20.05.2025
(51) Int. Cl.: B60R 1/06, B60R 1/074

(54) **EXTERNAL REAR-VIEW MIRROR ASSEMBLY FOR VEHICLES**

(71) Applicant: Ficosa Automotive, S.L.U., 08232 Viladecavalls, Barcelona (ES)
(72) Inventor: GÓMEZ TIMONEDA, David, 08032 Viladecavalls (ES); BRAVO CORBACHO, David, 08032 Viladecavalls (ES)
(74) Representative: Balder IP Law, S.L.

(57) **Abstract**

The invention refers to an external rear-view mirror assembly for vehicles, wherein the assembly comprises: a support part adapted to be attached to a vehicle, a mirror head supported by the support part and rotatable about a rotation point. The mirror head has a housing and a reflective surface, wherein the support part has a wall and a portion of the wall is arranged opposite to the reflective surface with respect to the rotation point. The assembly comprises a sealing gasket attached to the housing and made of, at least partially, an elastic material. The sealing gasket is placed and configured to be in contact with an outer surface of the wall in any relative position between the housing and the wall. The invention provides an external rear-view mirror assembly featuring a wind noise reduction property.

## Description

### TECHNICAL FIELD

The present invention relates to the manufacture of exterior rear-view mirror assemblies for vehicles.

An object of the invention is to provide an external rear-view mirror assembly for vehicles, featuring a wind noise reduction property.

### STATE OF THE ART

External rear-view mirror assemblies for motor vehicles, typically comprises: a fixed part configured to be attached to an exterior part of a vehicle, and a mirror head mounted with the fixed part, and rotatable relative to the fixed part. The mirror head typically includes a reflective surface and an actuator to move the mirror head and reflective surface, for example in tandem in some types of mirror heads.

When the vehicle moves forward, wind flows through an existing gap between the fixed part and the mirror head in different relative positions between the mirror head and the fixed part, generating noise and vibrations which may cause discomfort for the driver.

The U.S. patent US-11.247.611 B2 describes an external mirror assembly for a vehicle, which includes a support arm adapted to be affixed to a vehicle, and a mirror head movably mounted to the support arm. A flexible deflector is mounted to the mirror head surrounding a portion of the support arm received in the mirror head. The deflector has a stepped configuration allowing for stretching of the deflector as the mirror head is moved relative to the support arm and to reduce wind noise through a gap between the support arm portion and the mirror head.

However, as there is always a gap providing access to the mirror head interior, the wind would flow through the gap generating noise, and as consequence of that, the wind noise reduction effect is not good enough. This gap is more detrimental when it is located at the front of the mirror head, opposite the mirror surface, because in that position when the vehicle is moving forward, front air hitting the mirror head, flows through the gap into the mirror head.

Therefore, there is still room in this technical field for improvement the design of external rear-view mirrors for vehicles to reduce wind noise.

### DESCRIPTION OF THE INVENTION

The invention is defined in the attached independent claim, and satisfactorily solves the shortcomings of the prior art, by the provision of an external rear-view mirror assembly for vehicles, wherein the assembly comprises: a support part adapted to be attached to a vehicle, and a mirror head supported by the support part and rotatable about a rotation point.

The mirror head has a housing and a reflective surface, and the support part has a wall such that a portion of the wall is arranged opposite to the reflective surface with respect to the rotation point, that is, the wall is placed at the front of the mirror head as seen from a front view of the vehicle, such that the wall, in particular an outer surface of the wall, acts as a shield to prevent that incoming air could flow into the mirror head. Preferably, the wall is made of a rigid material.

The assembly further comprises a sealing gasket placed and configured to close a space between the housing and an outer surface of the wall, and wherein the sealing gasket is in contact with the housing and/or with the outer surface of the wall in any relative position between the housing and the wall,

At least a part of the sealing gasket is made of an elastic material.

In a preferred embodiment of the invention, the sealing gasket is attached to the housing and it is placed and configured to be in contact with the outer surface of the wall. The assembly is configured such that the sealing gasket or a part of it, is pressed against the outer surface of the wall and due to its elastic property, the space between the bottom portion of the mirror head housing and the wall of the support part, especially the gap between the housing and the wall at a front part of the assembly, is closed by the sealing gasket.

With the above-described arrangement there is no gap between the support part and the mirror head in any position of the mirror head relative to the support part, especially at a front part of the assembly, hence, wind cannot flow into the mirror head when the vehicle is moving forward, hence, wind noise is significantly reduced.

The sealing gasket has a contacting surface provided to be in contact with the outer surface of the wall, and in a preferred embodiment, the shape of the contacting surface follows the shape of a portion of the outer surface of the wall, or in other words the sealing gasket is designed to conform to the contour of a portion of the outer surface of the wall.

Preferably, the wall is placed internally with respect to the housing and the sealing gasket is interposed between the housing and the wall.

The assembly incorporates an actuator placed inside the housing, and adapted for rotating the mirror head about a rotation point.

The housing, the sealing gasket and the wall conform an opening for the passage of a component of the support part, such that this component extends into the housing through said opening, and a part of the actuator is coupled to that component with no relative movement therebetween.

In a preferred embodiment, a part of the contacting surface of the sealing gasket is part of an arc of circumference, preferably extending an angle within the range 60° - 230° with respect to the rotation point of the mirror head as seen on a plane parallel to ground or with respect to an axis substantially orthogonal to ground. Additionally, a portion of the wall is also curved, preferably, shaped as an arc of circumference, preferably extending an angle within the range 120° - 360° with respect to the rotation point of the mirror head.

The mirror head moves about one rotation axis and preferably about two rotation axes, a first rotation axis which is substantially parallel to ground and substantially orthogonal to a longitudinal axis of the vehicle, when the assembly is secured to the vehicle, and a second rotation axis which is substantially orthogonal to ground. The rotation angle of the first rotation axis is within the range (0° - 30°), and the rotation angle of the second rotation axis is within the range (0° - 150°) and preferably (0° - 30°).

The wall conforms a circumferential arc on the first rotation axis which extends within the range (0-45°), and also conforms a circumferential arc on the second rotation axis, which is more than 90°, preferably 120° and more than preferably 150°.

In an alternative embodiment, the sealing gasket and the wall are ring-shaped describing a 360° wall generated by the second rotation axis

The housing of the mirror head has a perimetral edge, and wherein the sealing gasket is affixed to a bottom portion of the perimetral edge or placed adjacent to the bottom portion of the perimetral edge. The bottom portion is a portion of the housing's perimetral edge closer to ground, when the mirror assembly is operatively attached to a vehicle.

The sealing gasket may be rotatable together with the housing, such that the sealing gasket is also rotatable about the rotation point of the mirror head.

In an alternative embodiment of the invention, the sealing gasket is attached to the outer surface of the wall instead of to the housing, such that the housing rotates in relation to the sealing gasket around the rotating point.

The assembly is configured such that, the maximum distance between the bottom portion of the housing's edge and the outer surface of the wall, is 15 mm, preferably 10 mm and more preferably 5mm in any relative position between the housing and the wall.

Preferably, at least a portion of the outer surface of the wall is curved, and said portion may belong substantially to a surface of a sphere, which center is the rotation point of the mirror head, and preferably the radius of the sphere may vary +/- 15mm, preferably +/-10mm, and more preferably +/-5mm.

In a preferred embodiment of the invention combinable with other embodiments, the sealing gasket has a supporting part configured to be attached to the housing, and a lip which is pressed against the outer surface of the wall. The lip has the contacting surface, and preferably the lip is configured as a hook. The supporting part is made of a first material and the lip is made of a second material, and wherein the second material is more flexible than the first material.

Alternatively, the sealing gasket may be formed as a unitary body using a single flexible material.

Preferably, the assembly is configured such that there is no relative movement between the mirror head and the reflective surface in any condition, especially when a user is adjusting the field of view of the reflective surface.

### BRIEF DESCRIPTION OF THE DRAWINGS

To complete the description and in order to provide a better understanding of the invention, a set of drawings is provided. These drawings form an integral part of the description and illustrate embodiments of the invention, which should not be interpreted as restricting the scope of the invention, but just as examples of how the invention can be carried out. The drawings comprise the following figures:

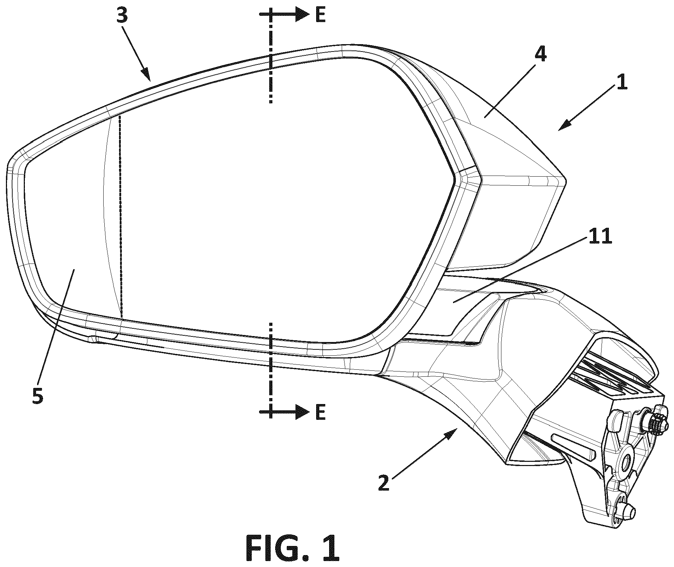

Figure 1.- shows a perspective view of a rear-view mirror assembly according to the invention in an assembled state.

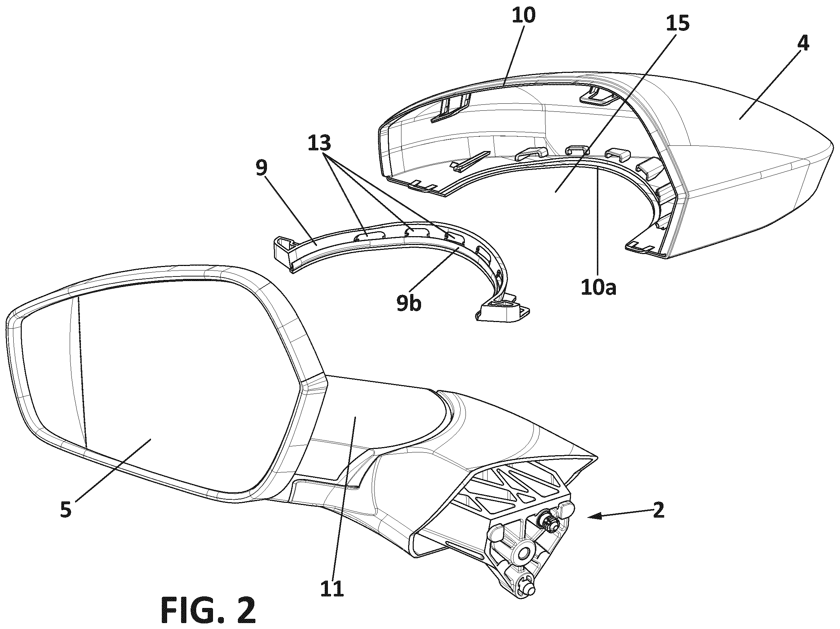

Figures 2 and 3.- show two exploded views of the rear-view mirror assembly and mirror head of the previous figure.
Figure 4.- shows a cross-sectional view taken at plane E-E in Figure 1. The dotted circumference represents the sphere within which the mirror head is rotatable about a rotation point X.
Figure 5.- shows an enlarged detail "F" taken from Figure 4.
Figure 6.- show the enlarged detail "F" of the previous figure in three relative positions between the mirror head and the wall of the fixed part: mirror head pointing upwards (Figure 6A); mirror head in an intermediate position (Figure 6B), and mirror head pointing downwards (Figure 6C).
Figure 7.- shows similar representations than Figure 6 but in the case that the sealing gasket is attached to the outer surface of the wall instead of the housing.

### PREFERRED EMBODIMENTS OF THE INVENTION

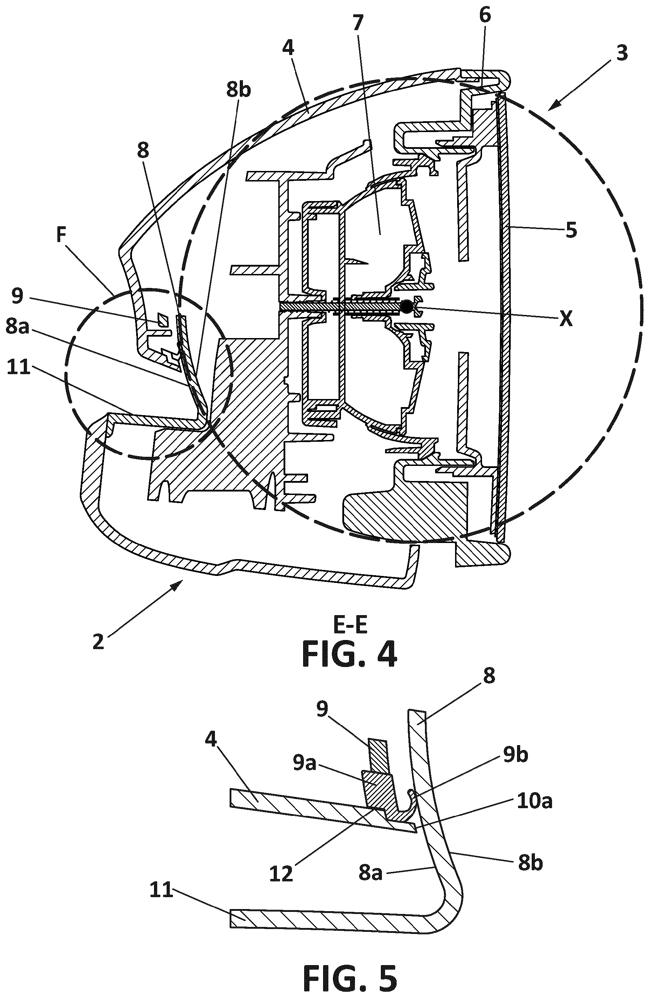

The attached figures show an exemplary embodiment of an external rear-view mirror assembly (1) according to the invention, which comprises a support part (2) adapted to be secured to a vehicle, and a mirror head (3) supported by the support part (2). The mirror head (3) in turn comprises a housing (4) and a reflective surface (5) mounted on a backplate (6), and an actuator (7) accommodated inside the housing (4) and adapted for rotating the mirror head (3) about a rotation point (X) as shown in **Figure 4****.**

The support part (2) has a wall (8) made of a rigid material, such that a portion of the wall (8) is arranged opposite to the reflective surface (5) with respect to the rotation point (X), as better shown in **Figure 4****.** The wall (8) has an inner surface (8b) and an outer surface (8a), wherein the inner surface (8b) is internally placed with respect to the mirror head (3), and the outer surface (8a) is exposed, at least in part, to the exterior of the assembly, so that when the assembly (1) is operatively installed in a vehicle and the vehicle is moving forward, incoming air would impact on the external surface (8a) of the wall (8) or on part of it.

The support part (2) in its upper part includes a cover (11), and the wall (8) is integrally formed with the cover (11).

The wall (8) conforms an opening (16) for the passage of a component of the support part (2), wherein the component extends into the housing (4) through said opening (16), such that a part of the actuator (7) is coupled to that component with no relative movement therebetween.

The assembly (1) further comprises a sealing gasket (9) made of, at least partially, an elastic material, which is attached to the housing (4). In particular, in the preferred embodiment shown in **Figures 4** to **6****,** the sealing gasket (9) is affixed to an inner surface of the housing (4) near a bottom portion (10a) of a perimetral edge (10) of the housing (4). The bottom portion is a portion of the housing's perimetral edge closer to ground when the mirror assembly is operatively attached to a vehicle.

Furthermore, the perimetral edge (10) configures an aperture (15) in the housing (4) through which at least part of the support part (2) is inserted. Additionally, the wall (8) is located at this aperture (15), so that the edge (10) at least partially surrounds the wall (8).

Since the sealing gasket (9) is attached to the housing (4) in the embodiment shown in **Figures 4** to **6****,** the sealing gasket (9) is also rotatable together with the housing about the rotation point (X).

As better shown in **Figure 4****,** the sealing gasket (9) is placed and configured to be in contact with an outer surface (8a) of the wall (8) in any relative position between the housing (4) and the wall (8), so that, when the vehicle is moving forward, wind passage into the mirror head is prevented or greatly reduced, thereby eliminating wind noise.

The wall (8) is placed internally with respect to the housing (4), and the sealing gasket (9) is interposed between the housing (4) and the wall (8).

The sealing gasket (9) has a supporting part (9a) configured to be attached to the housing (4) as it can be observed in **Figure 5****,** and a lip (9b) shaped as a hook which is pressed against the outer surface (8a) of the wall (8). The lip (9b) configures a contacting surface provided to be in contact with the outer surface (8a) of the wall (8), and the shape of this contacting surface follows the shape of a portion of the outer surface (8a) of the wall (8).

The supporting part (9a) may be made of a first material, and the lip (9b) may be made of a second material, wherein the second material is more flexible than the first material. Alternatively, the supporting part (9a) and the lip (9b) are integrally formed.

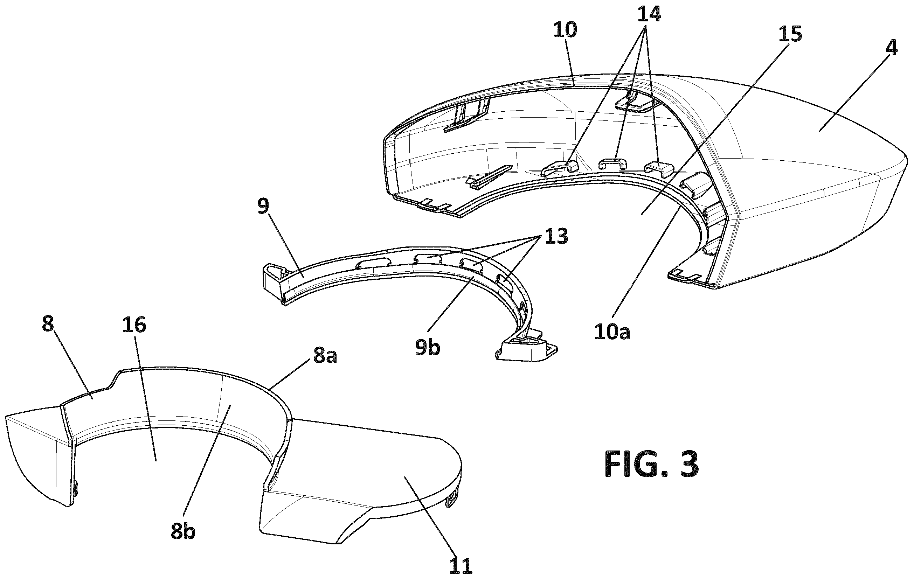

As shown in **Figure 5****,** the supporting part (9a) is large enough to the securely affixed to the housing (4). Furthermore, the housing (4) may have a stepped configuration (12) and the supporting part (9a) has a complementary shape to the stepped configuration on which is received to improve the attachment between these two components by any type of conventional means. For example, as shown in **Figure 3****,** the supporting part (9a) may be provided with protrusions (13) interlocking with recesses (14) formed in the housing (4). Alternatively, the protrusions (13) are provided in the housing (4) and the recesses (14) are formed in the supporting part (9a).

As it can be observed especially in **Figures 3** and **4****,** a major portion of both the wall (8) and the sealing gasket (9), are curved. The sealing gasket specially its lip (9b) generally follows the shape of the outer surface (8a) of the wall (8), although due to the elastic property of the lip, it is not necessary that the lip follows entirely the shape of the outer surface of the wall (8a) when it is relaxed, that is, without being deformed by pressure, because the lip is pressed against the wall (8a) it would be deformed to conform the shape of the wall (8a).

The assembly (1) is configured such that the maximum distance between the bottom portion of the housing's edge and the outer surface of the wall, is 5 mm in any relative position between the housing and the wall.

The contacting surface of the lip (9b) meant to be in contact with the outer surface (8a) of the wall (8), is part of an arc of circumference, preferably extending an angle within the range 60° - 230° with respect to the rotation point (X) as seen on a plane parallel to ground or with respect to an axis substantially orthogonal to ground. Additionally, a portion of the outer surface (8a) is also shaped as an arc of circumference, preferably extending an angle within the range 120° - 360° with respect to the rotation point (X).

At least a portion of the outer surface of the wall is curved, preferably said portion belongs to a surface of a sphere, which center is the rotation point of the mirror head, and preferably the radius of the sphere may vary +/- 5mm.

In an alternative embodiment, the contacting surface of the lip (9b) and the outer surface (8a) of the wall (8), are ring-shaped.

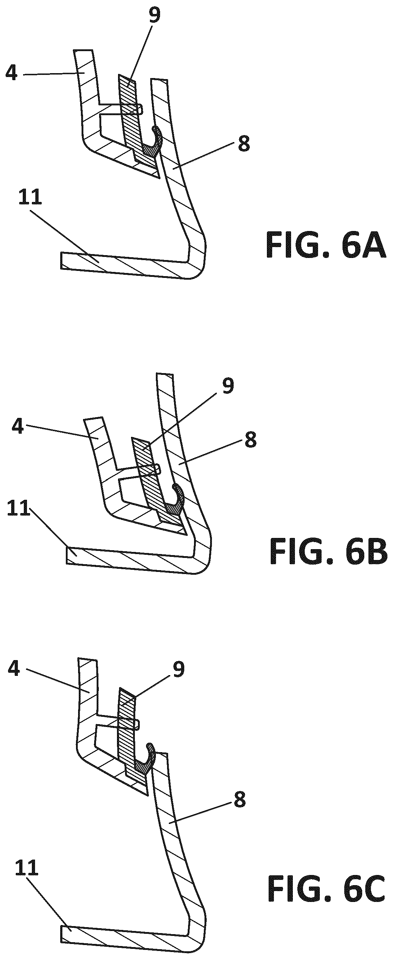

As represented in the sequence of **Figures 6A to 6C****,** the sealing gasket (9) is placed and configured to be in contact with the outer surface (8a) of the wall (8) in any relative position between the housing (4) and the wall (8).

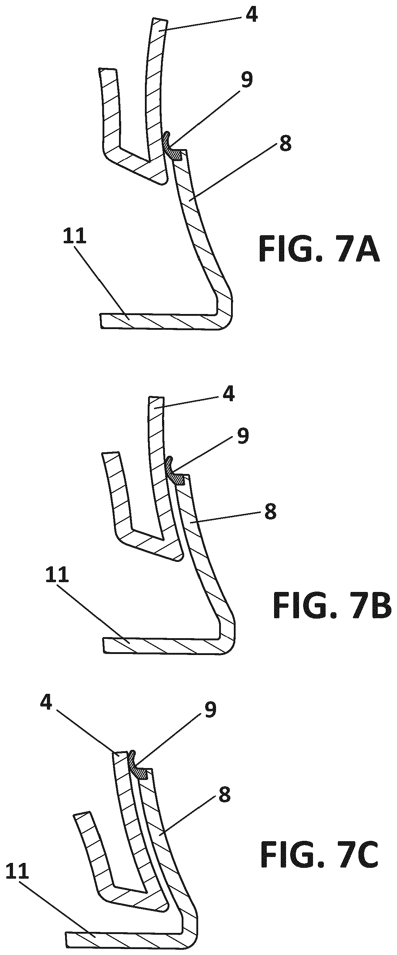

In an alternative embodiment of the invention as represented in **Figures 7A - 7C****,** the sealing gasket (9) is attached to the outer surface (8a) of the wall (8) instead of to the housing (4), such that the housing (4) rotates in relation to the sealing gasket (9) around the rotating point (X).

## Claims

1. External rear-view mirror assembly (1) for vehicles, the assembly (1) comprising:
a support part (2) adapted to be attached to a vehicle,
a mirror head (3) supported by the support part (2) and rotatable about a rotation point (X),
wherein the mirror head (3) has a housing (4) and a reflective surface (5),
wherein the support part (2) has a wall (8) and wherein a portion of the wall (8) is arranged opposite to the reflective surface (5) with respect to the rotation point (X),
wherein the assembly (1) further comprises a sealing gasket (9) made of, at least partially, of an elastic material, wherein the sealing gasket (9) is placed and configured to close a space between an outer surface (8a) of the wall (8) and the housing (4) in any relative position between the housing (4) and the wall (8).

2. An assembly (1) according to claim 1, wherein the sealing gasket (9) is attached to the housing (4) and it is placed and configured to be in contact with the outer surface (8a) of the wall (8), and wherein the sealing gasket (8) has a contacting surface provided to be in contact with the outer surface (8a) of the wall (8), and wherein the shape of the contacting surface follows the shape of a portion of the outer surface (8a) of the wall (8).

3. An assembly (1) according to claim 2, wherein the contacting surface is part of an arc of circumference, preferably extending an angle within the range 60° - 230° with respect to the rotation point (X).

4. An assembly (1) according to any of the preceding claims, wherein a portion of the wall (8) is shaped as an arc of circumference, preferably extending an angle within the range 120° - 360° with respect to the rotation point (X).

5. An assembly (1) according to claim 1, wherein the contacting surface of the lip (9b) and the outer surface (8a) of the wall (8), are ring-shaped.

6. An assembly (1) according to any of the preceding claims, wherein the wall (8) is placed internally with respect to the housing (4), and wherein the sealing gasket (9) is interposed between the housing (4) and the wall (8).

7. An assembly (1) according to any of the preceding claims, wherein the housing (4) has a perimetral edge (10), and wherein the sealing gasket (9) is affixed to or is adjacent to a bottom portion (10a) of the perimetral edge (10).

8. An assembly (1) according to claim 7, configured such that the maximum distance between the bottom portion (10a) of the housing's edge (10) and the outer surface (8a) of the wall (8), is 5 mm in any relative position between the housing (4) and the wall (8).

9. An assembly (1) according to any of the preceding claims, wherein at least a portion of the outer surface (8a) of the wall (8) is curved, preferably said portion belongs to a surface of a sphere, which center is the rotation point (X) of the mirror head (3), and preferably the radius of the sphere may vary +/- 5mm.

10. An assembly (1) according to any of the preceding claims, wherein the sealing gasket (9) is rotatable together with the housing (4), such that the sealing gasket (9) is also rotatable about the rotation point (X).

11. An assembly (1) according to any of the claims 2 to 10, wherein the sealing gasket (9) has a supporting part (9a) configured to be attached to the housing (4), and a lip (9b) which is pressed against the outer surface (8a) of the wall (8), and wherein the lip (9b) has the contacting surface, and preferably the lip (9b) is configured as a hook having a free edge placed internally in the mirror head (3).

12. An assembly (1) according to claim 11, wherein the supporting part (9b) is made of a first material and the lip (9b) is made of a second material, and wherein the second material is more flexible than the first material.

13. An assembly (1) according to any of the claims 1 to 11, wherein the sealing gasket (9) is formed as a unitary body using a single flexible material.

14. An assembly (1) according to any of the preceding claims, wherein the wall (8) is made of a rigid material.

15. An assembly (1) according to any of the preceding claims, wherein the support part (2) has a cover (11) coupled to an upper part of the support part, and wherein the wall (8) is integrally formed with the cover (11).
